# FASCICULE DE BREVET EUROPEEN

(11) **EP 3 377 389 B1**
(45) Date de publication et mention de la délivrance du brevet: **08.01.2020**
(21) Numéro de dépôt: 16805008.6
(22) Date de dépôt: 09.11.2016
(51) Int. Cl.: B62D 31/02

(54) **PROFILE MULTIFONCTION POUR OSSATURE DE VÉHICULE TERRESTRE DE TRANSPORT EN COMMUN DE PASSAGERS, OSSATURE ET VÉHICULE COMPRENANT UN TEL PROFILE**
MULTIFUNKTIONELLES PROFIL FÜR DIE STRUKTUR EINES LANDFAHRZEUGS FÜR ÖFFENTLICHEN PERSONENVERKEHR, STRUKTUR UND FAHRZEUG MIT SOLCH EINEM PROFIL
MULTI-FUNCTION PROFILE FOR THE STRUCTURE OF A LAND VEHICLE FOR PUBLIC PASSENGER TRANSPORT, STRUCTURE, AND VEHICLE COMPRISING SUCH A PROFILE

(30) Priorité: 16.11.2015 FR 1560972
(43) Date de publication de la demande: 26.09.2018
(73) Titulaire: Bluebus, 29500 Ergue Gaberic (FR)
(72) Inventeur: BESSON, Patrice, 69970 Marennes (FR); SAUVAGET, Thierry, 69780 Toussieu (FR)
(74) Mandataire: IPAZ
(86) Numéro de dépôt international: PCT/EP2016/077103
(87) Numéro de publication internationale: WO 2017/084931

(56) Documents cités:
- WO-A2-2007/061393
- DE-A1-102006 022 259
- US-A- 3 577 903
- US-A- 3 673 675

## Description

« Profilé multifonction pour ossature de véhicule terrestre de transport en commun de passagers, ossature et véhicule comprenant un tel profilé »

La présente invention concerne un profilé multifonction pour ossature de véhicule terrestre de transport en commun de passagers, de type bus ou tram-bus. Elle concerne également une ossature comprenant un tel profilé et un véhicule comprenant une telle ossature.

Le domaine de l'invention est le domaine de la construction des véhicules terrestres de transport en commun, notamment électriques, de type bus ou tram-bus.

### Etat de la technique

Les bus actuels sont construits par assemblage de nombreuses pièces formant au final l'ossature du bus qui est l'élément principal du bus. L'une des zones les plus sollicitées d'une ossature se trouve au niveau des coins supérieurs, c'est-à-dire au niveau des jonctions entre la paroi supérieure et les parois latérales de l'ossature.

Actuellement, chaque coin supérieur comporte un profilé standard, de section rectangulaire, se prolongeant longitudinalement sur une partie ou la totalité du bus. Il est nécessaire de renforcer ce profilé avec des éléments additionnels pour qu'il résiste aux sollicitations en traction, en compression et en torsion. L'ajout de ces éléments vient augmenter le poids de l'ossature, mais aussi son coût et le temps de production.

Une autre solution consiste à augmenter la section ou l'épaisseur du profilé, ce qui augmente le poids et le coût de l'ossature.

Chacun des documents US 3 577 903 A et US 3 673 675 A divulgue un profilé avec toutes les caractéristiques du préambule de la revendication indépendante 1.

Le profilé divulgué dans chacun des documents US 3 577 903 A et US 3 673 675 A semble être réalisé par extrusion et la forme résultante n'est pas adaptée à la fabrication par pliage et soudage d'une unique feuille de tôle.

Un profilé qui pourrait être fabriqué d'une unique feuille de tôle est divulgué dans le WO2007/061393 A2, cependant il n'y a aucune indication qu'il est effectivement fabriqué à partir d'une unique feuille de tôle, et il n'y a aucune indication d'une ligne de soudure.

En outre, avec l'architecture actuelle, les longerons formant la paroi supérieure et les montants formant la paroi latérale viennent se fixer sur le profilé. Puis les éléments d'habillage extérieur tels que des vitres, et éventuellement les éléments d'habillage intérieur, viennent se fixer sur les longerons ou les montants. Pour ce faire, des moyens de fixation additionnels sont utilisés, ce qui augmente encore plus le poids de l'ossature, son coût et le temps de production. De plus, le positionnement des différents éléments d'habillage reste difficile et chronophage.

Un but de la présente invention est de remédier à ces inconvénients.

Un autre but de l'invention est de proposer un profilé longitudinal pour ossature de véhicule terrestre de transport de passagers plus fonctionnel.

Il est aussi un autre but de l'invention de proposer un profilé longitudinal pour ossature de véhicule terrestre de transport de passagers, permettant de réaliser une ossature plus robuste avec moins d'éléments.

Un autre but de l'invention est de proposer un profilé longitudinal pour ossature de véhicule terrestre de transport de passagers, permettant de réaliser une ossature plus légère, moins coûteuse et de manière plus rapide.

### Exposé de l'invention

L'invention concerne un profilé pour la fixation d'une paroi supérieure et d'une paroi latérale longitudinale d'une ossature d'un véhicule terrestre de transport en commun de passagers, en particulier de type bus ou tram-bus, de section fermée, ledit profilé comprenant :
- une première face pour la fixation de la paroi supérieure, en particulier d'un ou plusieurs longerons transversaux formant ladite paroi supérieure,
- une deuxième face pour la fixation de la paroi latérale, en particulier d'un ou plusieurs montants formant ladite paroi latérale, et
- une face, dite extérieure, se trouvant entre ladite première face et ladite deuxième face, et en utilisation, du côté extérieur par rapport à un habitacle dudit véhicule, ladite face extérieure comprenant au moins une surface, dite de fixation, pour la fixation d'un élément d'habillage extérieur, formant un décroché dans ladite face extérieure, vers l'intérieur du profilé.

Le profilé selon l'invention est creux et réalisé par pliage et soudage d'une unique feuille de tôle, le soudage étant réalisé au niveau d'une face, dite intérieur, se trouvant entre la première face et la deuxième face, et en utilisation, du côte de l'habitacle du véhicule.

Ainsi, le profilé selon l'invention permet de réaliser, non seulement, la fixation de la paroi supérieure et de la paroi latérale, mais aussi d'un ou plusieurs éléments d'habillage. Par conséquent, le profilé selon l'invention est multifonctions, c'est-à-dire plus fonctionnel que les profilés utilisés dans les ossatures de l'état de la technique.

Il permet de diminuer le nombre d'éléments de fixation additionnels utilisés dans une ossature de véhicule, ce qui rend l'ossature moins coûteuse, moins lourde et moins chronophage à réaliser.

De plus, la surface de fixation de l'élément d'habillage formant un décroché dans la face extérieure du profilé, le positionnement de l'élément d'habillage extérieur sur l'ossature est facilité et plus rapide.

Suivant une autre caractéristique avantageuse du profilé selon l'invention, la première face peut être décalée par rapport à la deuxième face suivant une direction perpendiculaire à ladite première face, de sorte que la deuxième face s'arrête avant ladite première face suivant ladite direction perpendiculaire.

Ainsi, la paroi supérieure peut être fixée sur le profilé selon l'invention au niveau d'une zone de moindre effort dans l'ossature, ce qui permet d'augmenter la rigidité de l'ossature et sa tenue mécanique.

Suivant encore une autre caractéristique avantageuse du profilé selon l'invention, la deuxième face est décalée par rapport à la première face suivant une direction perpendiculaire à ladite deuxième face, de sorte que la première face s'arrête avant ladite deuxième face suivant ladite direction perpendiculaire.

Ainsi, la paroi latérale peut être fixée sur le profilé selon l'invention au niveau d'une zone de moindre effort dans l'ossature, ce qui permet d'augmenter la rigidité de l'ossature et sa tenue mécanique.

En outre, la première face peut comprendre deux surfaces de fixation, disposées l'une au-dessus de l'autre, et décalées l'une par rapport à l'autre suivant une direction perpendiculaire à ladite première face, prévue chacune pour y fixer un longeron faisant partie de la paroi supérieure. Chaque longeron peut être soudé de bout sur ladite face.

Ainsi, le profilé selon l'invention est encore plus fonctionnel car il permet de s'adapter à une architecture d'ossature variable, par exemple dans le cas où il est nécessaire renforcer encore plus la paroi supérieure. Un tel renforcement peut être mis en place lorsque des charges lourdes peuvent être disposées sur ou dans la paroi supérieure, tels que des modules de stockage d'énergie, des modules de traitement d'air, etc.

Avantageusement, au moins une surface de fixation, dite latérale, peut-être adjacente à la deuxième face et être prévue pour fixer un élément d'habillage de la paroi latérale, et permet de fixer en particulier une vitre latérale, ce qui permet de faciliter l'habillage latéral de l'ossature du véhicule.

La surface de fixation latérale peut, en particulier, être perpendiculaire à la deuxième face, ou former un angle compris entre 85° et 95°. Ainsi, l'élément d'habillage latéral peut être aligné avec la paroi latérale de l'ossature de manière simple et rapide.

Avantageusement, au moins une surface de fixation, dite supérieure, peut être adjacente à la première face et être prévue pour fixer un élément d'habillage de la paroi supérieure, en particulier un capot supérieur ou une vitre supérieure, ce qui permet de faciliter l'habillage supérieur de l'ossature du véhicule.

Suivant un mode de réalisation nullement limitatif, la première face et la deuxième face forment un angle compris entre 40° et 80°, et en particulier compris entre 55° et 65°.

Ainsi, il est possible de concevoir une ossature présentant, au niveau du coin supérieur, un angle supérieur à 90°, ce qui permet de mieux distribuer les efforts s'appliquant sur l'ossature au niveau dudit coin. De plus, il est possible, avec un tel profilé, de réaliser une ossature dans laquelle la paroi supérieure et la paroi latérale se rejoignent suivant une trajectoire plus fluide et moins rectangulaire, de sorte à améliorer la tenue mécanique de l'ossature et la luminosité naturelle de l'habitacle.

Le profilé selon l'invention est creux.

Dans ce cas, la paroi du tube peux présenter une épaisseur comprise entre 1mm et 5mm, et en particulier égale à 3mm.

Le profilé selon l'invention est réalisé par pliage, puis soudage d'une unique feuille de tôle.

Avantageusement, le soudage peut être réalisé sur une surface non visible dudit profilé.

En particulier, le soudage peut être réalisé sur une surface de moindres contraintes.

Encore plus particulièrement, le soudage peut être réalisé sur une surface d'assemblage dudit profilé avec un longeron ou un montant.

Selon l'invention, le soudage est réalisé au niveau d'une face, dite intérieure, se trouvant entre la première face et la deuxième face, et en utilisation, du côté de l'habitacle du véhicule.

Suivant un autre exemple de réalisation avantageux, le soudage peut être réalisé au niveau de la surface de fixation. Ainsi, elle est cachée sous l'élément d'habillage extérieur.

Le profilé selon l'invention peut être réalisé en acier, ou en inox.

Le profilé selon l'invention peut en plus être traité contre l'oxydation, en particulier par cataphorèse, par exemple en étant plongé dans un bain de cataphorèse.

Alternativement, le profilé selon l'invention peut être traité par application d'une couche de peinture, ou de tout autre produit de protection.

Suivant un autre aspect de la même invention, il est proposé une ossature pour véhicule terrestre de transport en commun de passagers, en particulier de type bus ou tram-bus, comprenant une paroi supérieure, deux parois latérales longitudinales et une paroi inférieure.

L'ossature selon l'invention peut comprendre un profilé selon l'invention, entre la paroi supérieure et au moins une, en particulier chaque, paroi latérale longitudinale de ladite ossature.

Un tel profilé est également appelé « profilé supérieur » dans la suite de la demande.

Avantageusement, au moins un, en particulier chaque, profilé supérieur peut s'étendre sur toute la longueur de ladite ossature, du moins sur la majorité de la longueur de ladite ossature.

La première face du profilé supérieur peut être perpendiculaire à la paroi supérieure. Ainsi, la paroi supérieure peut être fixée sur ladite première face de bout et ne présenter aucune partie qui vient recouvrir une autre surface/face du profilé supérieur. Une telle fixation permet de diminuer encore plus le poids de l'ossature et d'augmenter la largeur de l'habitacle.

La deuxième face du profilé supérieur peut être perpendiculaire à la paroi latérale. Ainsi, la paroi latérale peut être fixée sur ladite deuxième face de bout et ne présenter aucune partie qui vient recouvrir une autre surface/face dudit profilé supérieur. Une telle fixation permet de diminuer encore plus le poids de l'ossature et d'augmenter la hauteur de l'habitacle.

Avantageusement, pour au moins un profilé supérieur, la paroi latérale, respectivement la paroi supérieure, peut être fixée sur le profilé longitudinal par soudage, en particulier par soudage inox.

Alternativement, au moins une paroi peut être fixée sur le profilé longitudinal supérieur par boulonnage.

Avantageusement, l'ossature selon l'invention peut en outre comprendre un profilé, dit inférieur, entre ladite paroi inférieure et au moins une, en particulier chaque, paroi latérale.

Selon l'invention, le profilé longitudinal inférieur peut être de section fermée.

De plus, le profilé longitudinal inférieur peut comprendre :
- une première face pour la fixation de ladite paroi inférieure, et
- une deuxième face pour la fixation de ladite paroi latérale ;
l'une desdites faces étant décalée par rapport à l'autre desdites faces suivant une direction perpendiculaire à ladite une face, de sorte que ladite autre face s'arrête avant, et à distance de, ladite une face suivant ladite direction perpendiculaire.

Avantageusement, au moins un profilé inférieur peut comprendre une face, dite intérieure, se trouvant entre la première face et la deuxième face, et en utilisation, du côté de l'habitacle du véhicule. En particulier, la face intérieure du profilé inférieur peut rejoindre les premières et deuxième faces de fixation entre-elles.

La face intérieure peut être recourbée vers l'intérieur du profilé. Ainsi, la hauteur et la largeur de l'habitacle sont augmentées.

Dans une version préférée, l'ossature selon l'invention peut comprendre plusieurs anneaux rigides alignés dans le sens longitudinal de ladite ossature.

Chaque anneau rigide peut faire le tour de l'ossature dans le sens de la largeur de ladite ossature et peut être formé par :
- un montant, faisant partie de l'une des parois latérales longitudinales de ladite ossature et venant se fixer sur un premier profilé supérieur et sur un premier profilé inférieur ;
- un montant, faisant partie de l'autre des parois latérales longitudinales de ladite ossature et venant se fixer sur un deuxième profilé supérieur et sur un deuxième profilé inférieur ;
- au moins un longeron, faisant partie de la paroi supérieure de ladite ossature et venant se fixer sur ledit premier profilé supérieur et sur ledit deuxième profilé supérieur ; et
- un longeron, faisant partie de la paroi inférieure de ladite ossature et venant se fixer sur ledit premier profilé inférieur et sur ledit deuxième profilé inférieur.

Une telle architecture permet d'obtenir une ossature plus robuste, de conception et de fabrication simplifiées.

Suivant un autre aspect de la même invention, il est proposé un véhicule terrestre de transport en commun, en particulier sur route, comprenant une ossature selon l'invention.

Avantageusement, au moins une partie de la face extérieure d'au moins un profilé longitudinal, en particulier de chaque profilé longitudinal supérieur, forme au moins une partie de la surface extérieure visible dudit véhicule, en particulier au niveau d'un coin supérieur dudit véhicule.

Ainsi, au niveau de cette zone, il n'est pas nécessaire d'ajouter un élément d'habillage extérieur, ce qui permet de diminuer le coût, le poids et le temps de fabrication d'un tel véhicule.

Un tel véhicule peut être un véhicule hybride ou un véhicule électrique.

Un tel véhicule peut être un bus, un car ou un tram-bus.

Dans la présente demande, un « tram-bus » désigne un véhicule électrique terrestre de transport en commun monté sur roues et qui se recharge à chaque station, afin de ne pas nécessiter des infrastructures lourdes de type rails, caténaires, sur la voirie. Un tel véhicule électrique se recharge à chaque station au moyen d'éléments de charge de la station et d'un connecteur reliant ledit véhicule à ladite station.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE la est une représentation schématique d'un premier exemple de réalisation non limitatif d'un profilé longitudinal supérieur selon l'invention, suivant une vue de coupe ;
- la FIGURE 1b est une représentation schématique d'une variante du profilé de la FIGURE 1a, suivant une vue de coupe ;
- la FIGURE 2 est une représentation schématique d'un deuxième exemple de réalisation non limitatif d'un profilé longitudinal supérieur, suivant une vue de coupe ;
- la FIGURE 3 est une représentation schématique d'un troisième exemple de réalisation non limitatif d'un profilé longitudinal supérieur selon l'invention, suivant une vue de coupe ;
- la FIGURE 4 est une représentation schématique d'un exemple de réalisation non limitatif d'une ossature selon l'invention, suivant une vue de coupe simplifiée ;
- la FIGURE 5 est une représentation schématique d'un exemple de réalisation d'une ossature selon l'invention, suivant une vue isométrique ; et
- la FIGURE 6 est une représentation schématique d'un exemple de réalisation d'un profilé longitudinal inférieur pouvant être utilisé dans une ossature selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieur.

Sur les figures, les éléments communs à plusieurs figures conservent la même référence.

La FIGURE la est une représentation schématique, selon une vue en coupe, d'un exemple de réalisation non limitatif d'un profilé longitudinal selon l'invention.

Le profilé 100 représenté sur la FIGURE la est de section fermée. Il est utilisé dans une ossature d'un véhicule pour relier la paroi supérieure de l'ossature avec une paroi latérale longitudinale de l'ossature.

Dans la suite de la demande, le profilé 100 peut être appelé profilé supérieur.

Le profilé 100 comporte une première face 102 de fixation d'une paroi supérieure d'une ossature avec le profilé 100, une deuxième face 104 de fixation d'une paroi latérale longitudinale d'une ossature avec le profilé 100, une face extérieure 106 se trouvant du côté opposé à un habitacle de l'ossature et une face intérieure 108 se trouvant du côté dudit habitacle.

La face extérieure 106 comporte une surface 110 de fixation d'un élément d'habillage de la paroi latérale, tel que par exemple un élément vitré. La surface de fixation 110 de l'élément d'habillage forme un décroché dans la face extérieure 106, vers l'intérieur du profilé 100, de sorte que l'élément d'habillage, une fois fixé sur la face extérieure, se trouve en continuité de la face extérieure 106 ou ne fasse pas saillie de la face extérieure 106.

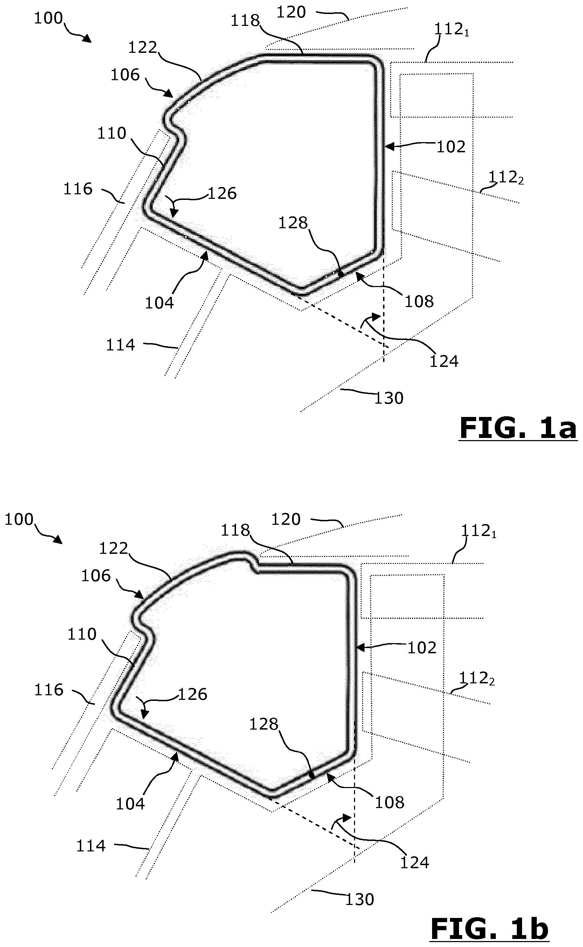

Sur la FIGURE 1a, la première face 102 est prévue pour recevoir un longeron 112₁ faisant partie de la paroi supérieure, la deuxième face 104 est prévue pour recevoir un montant 114 et la surface de fixation 110 est prévue pour recevoir un élément d'habillage extérieur vitré 116, représentés tous en pointillés.

La première face 102 peut, optionnellement servir à la fixation d'un deuxième longeron 112₂, disposé en dessous du longeron 112₁ et utilisé pour former un logement dans la paroi supérieure ou en dessous de la paroi supérieure. Un tel logement peut être utilisé pour y loger au moins un module de stockage d'énergie électrique, un dispositif de traitement d'air, etc.

Le profilé 100 peut comprendre au niveau de sa face extérieure 106 une surface 118 de fixation d'un élément d'habillage 120 de la paroi supérieure, tel qu'un élément de capotage ou une paroi d'étanchéité.

Le profilé 100 peut en outre comprendre au niveau de sa face extérieure 106, une surface 122, non recouverte par un élément d'habillage et prévue pour former une partie de la surface extérieure du véhicule, en particulier au niveau du coin supérieur du véhicule. Ainsi, il n'est pas nécessaire d'utiliser un élément d'habillage extérieur pour former la surface extérieure du véhicule au niveau de cette zone, la surface 122 étant alors une surface visible de l'extérieur du véhicule (partie de la carrosserie/peau du véhicule).

Chacun des éléments 112-116 est fixé sur le profilé 100 directement sans utilisation d'un élément de fixation additionnel. Par exemple, les longerons 112₁-112₂ et le montant 114 sont fixés sur le profilé 100 par soudage, en particulier inox, et l'élément d'habillage 116 est fixé sur la surface de fixation 110 par collage.

Bien entendu, alternativement ou en plus, les longerons 112₁-112₂ et le montant 114 peuvent être fixés sur le profilé 100 par boulonnage.

L'élément d'habillage 120 peut être fixé sur le profilé par collage, par soudage ou par vissage, etc.

Dans l'exemple représenté, la première face 102 est perpendiculaire à la direction définie par le longeron 112₁, c'est-à-dire perpendiculaire à la paroi supérieure dont fait partie le longeron 112₁. Ainsi, le longeron 112₁, et donc la paroi supérieure, est fixée au profilé 100 de bout, c'est-à-dire sans se chevaucher avec aucune partie du profilé 100.

De plus, la première face 102 est décalée par rapport à la deuxième face 104 suivant une direction perpendiculaire à la première face 102, de sorte que la deuxième face 104 s'arrête avant et à distance de la première face 102 suivant ladite direction perpendiculaire.

Par ailleurs, la deuxième face 104 est perpendiculaire à la direction définie par le montant 114, c'est-à-dire perpendiculaire à la paroi latérale longitudinale dont fait partie le montant 114. Ainsi, le montant 114, et donc la paroi latérale, est fixée au profilé 100 de bout, c'est-à-dire sans se chevaucher avec aucune partie du profilé 100.

De plus, la deuxième face 104 est décalée par rapport à la première face 102 suivant une direction perpendiculaire à la deuxième face 104, de sorte que la première face 102 s'arrête avant et à distance de la deuxième face 104 suivant ladite direction perpendiculaire.

La première face 102 et la deuxième face 104 forment entre-elles un angle 124 égal à 60°, ou compris entre 55° et 65°, de sorte que la paroi supérieure et la paroi latérale longitudinale forment entre-elles un angle supérieur à 90°.

La surface de fixation 110 de l'élément d'habillage latéral 116 et la deuxième face 104 forment entre-eux un angle 126 égal à 90°, ou compris entre 85° et 95°.

De plus, la surface 122, prévue pour ne pas être recouverte par un élément d'habillage et former la surface extérieure du véhicule au niveau d'un coin supérieur dudit véhicule, est sensiblement arrondie ou circulaire de sorte à obtenir une continuité arrondie au niveau d'un coin supérieur du véhicule.

Optionnellement, la deuxième face 104 et/ou la face intérieure 108, du profilé 100 peu(ven)t être utilisée(s) comme face(s) d'appui pour une pièce de renfort 130 (représentée en pointillés sur les figures), appelé jambe de renfort, venant renforcer la tenue mécanique de l'ossature. Une telle jambe de renfort 130 peut être fixée au montant vertical 114, et éventuellement au(x) longeron(s) 112₁ et/ou 112₂.

Le profilé supérieur 100 représenté sur la FIGURE la est réalisé par pliage et soudage d'une feuille d'acier d'épaisseur 3mm, ou comprise entre 1mm et 5mm.

La ligne de soudage 128 est positionnée, de préférence, au niveau de la face intérieure 108, sur laquelle aucune paroi n'est fixée.

Alternativement, la ligne de soudage 128 peut être positionnée au niveau d'une autre face/surface, préférentiellement non visible. Par exemple la ligne de soudage 128 peut être positionnée au niveau de la surface de fixation 110 ou au niveau d'une des faces 102 ou 104.

Le profilé 100 est, de préférence, traité par cataphorèse contre l'oxydation.

Ainsi, dans l'exemple décrit, le profilé 100 est utilisé pour réaliser plusieurs fonctions, sans utilisation de dispositif de fixation additionnel, à savoir les fonctions suivantes :
- fixation de la paroi supérieure,
- fixation de la paroi latérale longitudinale,
- fixation d'un élément d'habillage extérieur de la paroi latérale,
- fixation d'un élément d'habillage extérieur de la paroi supérieure,
- fixation d'un élément définissant un logement dans la paroi supérieure,
- constitution d'une partie visible de la face extérieure du véhicule, autrement dit d'une partie de l'habillage extérieur du véhicule, et
- support pour une jambe de renfort de l'ossature.

La FIGURE 1b est une variante du profilé 100 représenté sur la FIGURE 1a.

Dans la variante représentée sur la FIGURE 1b, la surface 118 de fixation de l'élément d'habillage 120 de la paroi supérieure forme un décroché dans la face extérieure 106, vers l'intérieur du profilé 100, de sorte que l'élément d'habillage 120, une fois fixé sur la face extérieure, se trouve en continuité de la face extérieure 106 ou ne fasse pas saillie de la face extérieure 106.

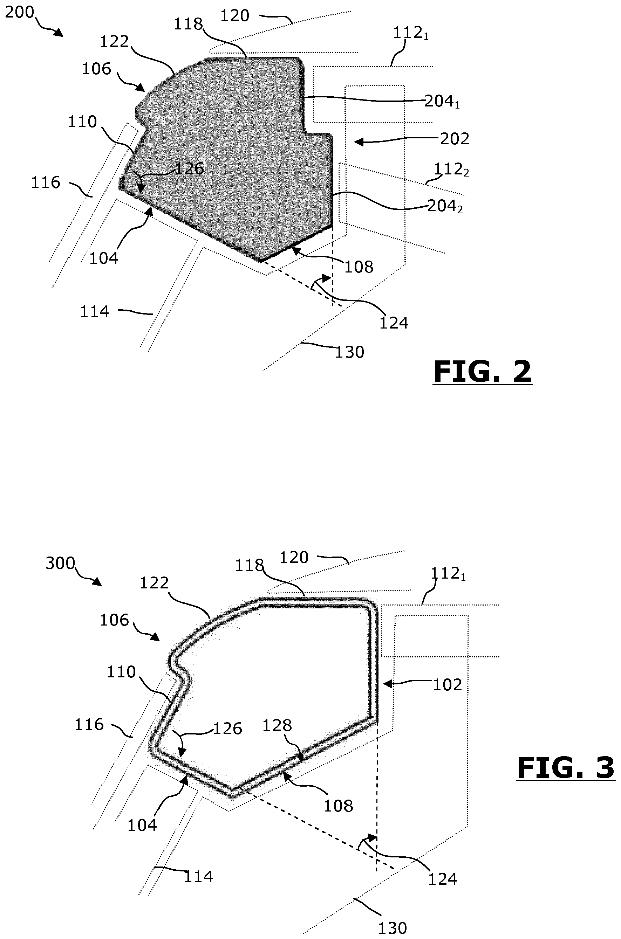

La FIGURE 2 est une représentation schématique, selon une vue en coupe, d'un deuxième exemple de réalisation non limitatif d'un profilé longitudinal selon l'invention.

Le profilé 200 représenté sur la FIGURE 2 présente une section légèrement différente de la section du profilé 100 de la FIGURE 1a.

Néanmoins, le profilé 200 comprend tous les éléments du profilé 100 de la FIGURE la qui gardent les mêmes références sur la FIGURE 2.

A la différence du profilé 100 de la FIGURE 1a, le profilé 200 comporte une première face 202 comportant deux surfaces de fixation 204₁ et 204₂ décalées l'une par rapport à l'autre dans la direction perpendiculaire à la face 202. La surface 204₁ est utilisée pour fixer le longeron 112₁ et la surface 204₂ est utilisée pour fixer le longeron 112₂.

Tel que représenté sur la FIGURE 2, le profilé 200 est plein. Il est obtenu par extrusion ou par moulage.

Alternativement, le profilé 200 peut également être creux, à l'instar du profilé 100 de la FIGURE 1a.

La FIGURE 3 est une représentation schématique, selon une vue en coupe, d'un troisième exemple de réalisation non limitatif d'un profilé longitudinal selon l'invention.

Le profilé 300 représenté sur la FIGURE 3 présente une section légèrement différente de la section du profilé 100 de la FIGURE 1a.

Néanmoins, le profilé 300 comprend tous les éléments du profilé 100 de la FIGURE la qui gardent les mêmes références sur la FIGURE 3.

A la différence du profilé 100 de la FIGURE 1a, sur le profilé 300, la première face 102 est utilisée pour la fixation d'un seul longeron, à savoir le longeron 112₁. Elle présente une largeur plus faible et la face intérieure 108 est plus large.

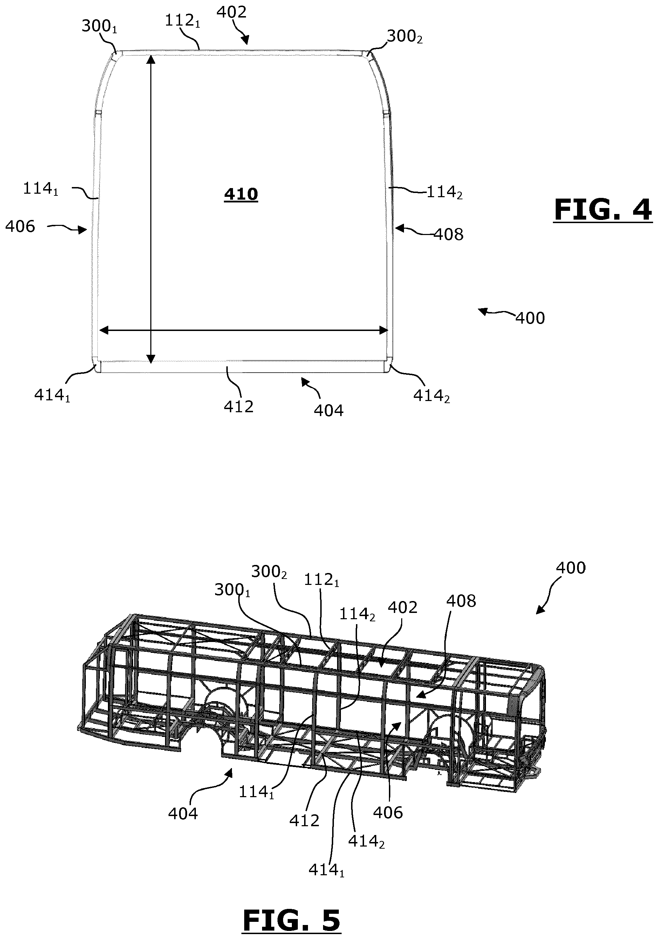

La FIGURE 4 est une représentation schématique, selon une vue en coupe simplifiée, d'un exemple de réalisation non limitatif d'une ossature selon l'invention.

La FIGURE 5 est une représentation schématique, selon une vue isométrique, d'un exemple de réalisation non limitatif d'une ossature selon l'invention, par exemple de l'ossature de la FIGURE 4.

En référence à la FIGURE 4, l'ossature 400 comprend :
- une paroi supérieure 402 comprenant le longeron 112₁,
- une paroi inférieure 404,
- une première paroi latérale longitudinale 406 sensiblement verticale, rejoignant la paroi supérieure 402 et la paroi inférieure 404, et comprenant des montants 114₁, et
- une deuxième paroi latérale longitudinale 408 sensiblement verticale, rejoignant la paroi supérieure 402 et la paroi inférieure 404, et comprenant des montants 114₂.

Les parois 402-408 définissent un habitacle 410, en particulier fermé.

L'ossature 400 comprend un premier profilé longitudinal supérieur 300₁, par exemple identique au profilé 300 de la FIGURE 3, sur lequel sont fixées la paroi latérale 406 et la paroi supérieure 402, et un deuxième profilé longitudinal supérieur 300₂, par exemple identique au profilé 300 de la FIGURE 3, sur lequel sont fixées la paroi latérale 408 et la paroi supérieure 402.

Chacun des profilés supérieurs 300₁ et 300₂ s'étend, de préférence, sur toute la longueur de l'ossature 400.

La paroi inférieure 404 peut être formée par plusieurs longerons 412.

L'ossature 400 comprend en outre un premier profilé longitudinal inférieur 414₁, sur lequel sont fixées la paroi latérale 406 et la paroi inférieure 404, et un deuxième profilé longitudinal inférieur 414₂, sur lequel sont fixées la paroi latérale 408 et la paroi inférieur 404.

L'ossature 400 peut alternativement comprendre au moins un profilé longitudinal supérieur 100 de la FIGURE 1a, ou au moins un profilé 200 de la FIGURE 2, à la place de chacun des profilés 300₁ et 300₂, ou en combinaison avec au moins un des profilés 300₁ et 300₂.

Chacun des profilés inférieurs 414₁ et 414₂ s'étend, de préférence, sur toute la longueur de l'ossature 400, excepté au niveau des passages de roues.

En outre, tel que visible sur les FIGURES 4 et 5, les profilés supérieurs 300₁-300₂ et inférieurs 414₁-414₂ permettent de concevoir une ossature 400 comportant plusieurs anneaux rigides. Chaque anneau rigide fait le tour de ladite ossature 400 dans le sens de la largeur, autour de l'habitacle 410.

Chaque anneau rigide est formé par :
- le montant 114₁, faisant partie de la paroi latérale longitudinale 406 de l'ossature 400 et venant se fixer sur le profilé supérieur 300₁ et sur le profilé inférieur 414₁ ;
- le montant 114₂, faisant partie de la paroi latérale longitudinale 408 de l'ossature 400 et venant se fixer sur le profilé supérieur 300₂ et sur le profilé inférieur 414₂ ;
- le longeron 112₁, faisant partie de la paroi supérieure 402 et venant se fixer sur les profilés supérieurs 300₁ et 300₂ ; et
- un longeron 412, faisant partie de la paroi inférieure 404 et venant se fixer sur les profilés inférieurs 414₁ et 414₂.

Les anneaux peuvent être disposés à égale distance les uns des autres ou à des distances variables.

Une telle architecture d'ossature permet d'obtenir une ossature plus rigide, de conception et de fabrication simplifiées.

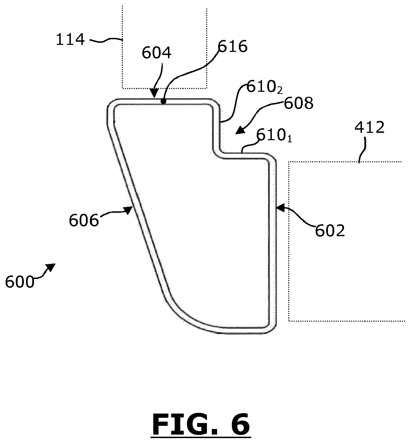

La FIGURE 6 est une représentation schématique, selon une vue en coupe, d'un exemple de réalisation non limitatif d'un profilé longitudinal inférieur pouvant être utilisé dans une ossature selon l'invention, en particulier dans l'ossature 400 des FIGURES 4 et 5, en combinaison avec au moins un profilé supérieur selon l'invention, et en particulier avec l'un quelconque des profilés 100, 200 et 300 des FIGURES 1a, 1b, 2 et 3, respectivement.

Le profilé inférieur 600 représenté sur la FIGURE 6 peut être l'un quelconque des profilés inférieur 414₁ et 414₂ décrits plus haut.

Le profilé 600 est de section fermée. Il peut être creux ou plein.

Le profilé inférieur 600 comporte une première face 602 de fixation d'une paroi inférieure d'une ossature avec le profilé 600, une deuxième face 604 de fixation d'une paroi latérale longitudinale d'une ossature avec le profilé 600, une face extérieure 606 se trouvant du côté opposé à un habitacle de l'ossature et une face intérieure 608 se trouvant du côté dudit habitacle.

La face intérieure 608 est recourbée vers le profilé. Elle est formée par deux parties 610₁ et 610₂, perpendiculaires entre-elles. La partie 610₁ se trouve du côté de la première face 602 et est perpendiculaire à la première face 602 et parallèle à la deuxième face 604. La partie 610₂ se trouve du côté de la deuxième face 604 et est perpendiculaire à la deuxième face 604 et parallèle à la première face 602.

La première face 602 est perpendiculaire à la deuxième face 604.

De plus, la première face 602 est décalée par rapport à la deuxième face 604 suivant une direction perpendiculaire à la première face 602, de sorte que la deuxième face 604 s'arrête avant et à distance de la première face 602 suivant ladite direction perpendiculaire.

Par ailleurs, la deuxième face 604 est décalée par rapport à la première face 602 suivant une direction perpendiculaire à la deuxième face 604, de sorte que la première face 602 s'arrête avant et à distance de la deuxième face 604 suivant ladite direction perpendiculaire.

Sur la FIGURE 6, la première face 602 est prévue pour recevoir le longeron 412 faisant partie de la paroi inférieure d'une ossature, la deuxième face 604 est prévue pour recevoir un montant 114 faisant partie de la paroi latérale d'une ossature. Le longeron 412 et le montant 114 sont représentés en pointillés.

Dans l'exemple représenté, la première face 602 est perpendiculaire à la direction définie par le longeron 412, c'est-à-dire perpendiculaire à la paroi inférieure dont fait partie le longeron 412. Ainsi, le longeron 412, et donc la paroi inférieure, est fixée au profilé 600 de bout, c'est-à-dire sans se chevaucher avec aucune partie du profilé 600.

Par ailleurs, la deuxième face 604 est perpendiculaire à la direction définie par le montant 114, c'est-à-dire perpendiculaire à la paroi latérale longitudinale dont fait partie le montant 114. Ainsi, le montant 114, et donc la paroi latérale, est fixée au profilé 600 de bout, c'est-à-dire sans se chevaucher avec aucune partie du profilé 600.

Chacun des éléments 114 et 412 est fixé sur le profilé 600 directement sans utilisation d'un élément de fixation additionnel. Par exemple, le longeron 412 et le montant 114 sont fixés sur le profilé 600 par soudage, en particulier inox.

Bien entendu, alternativement ou en plus, le longeron 412 et le montant 114 peuvent être fixés sur le profilé 600 par boulonnage.

Le profilé supérieur 600 représenté sur la FIGURE 6 est réalisé par pliage et soudage d'une feuille d'acier d'épaisseur 3mm, ou comprise entre 1mm et 5mm.

La ligne de soudage 616 est positionnée, par exemple, au niveau de la deuxième face 604.

Alternativement, la ligne de soudage peut être positionnée au niveau de la première face 602 ou au niveau de la face intérieur 608, et plus généralement au niveau d'une surface non visible.

Le profilé 600 est traité par cataphorèse contre l'oxydation.

Bien que non représentée sur la FIGURE 6, la face extérieure 606 peut comporter une surface de fixation, dite latérale, d'un élément d'habillage de la paroi latérale, et ou une surface de fixation, dite inférieure, d'un élément d'habillage de la paroi inférieure. L'une au moins de ces surfaces de fixation peut être formée par une surface formant un décroché dans la face extérieure 606 de sorte que l'élément d'habillage, une fois fixé sur la face extérieure, se trouve en continuité du reste de la face extérieure 606 ou ne fasse pas saillie de la face extérieure 606.

Ainsi, dans l'exemple décrit, le profilé 600 est utilisé pour réaliser plusieurs fonctions, sans utilisation de dispositif de fixation additionnel, à savoir les fonctions suivantes :
- fixation de la paroi inférieure,
- fixation de la paroi latérale longitudinale,
- fixation d'un élément d'habillage extérieur de la paroi latérale,
- fixation d'un élément d'habillage extérieur de la paroi inférieure,
- augmentation de la largeur de l'habitacle, et
- augmentation de la hauteur de l'habitacle.

De même, chacun des profilés supérieurs 100, 200 et 300 décrits plus haut remplissent plusieurs fonctions, à savoir :
- fixation de la paroi supérieure,
- fixation de la paroi latérale longitudinale,
- fixation d'un élément d'habillage extérieur de la paroi latérale,
- fixation d'un élément d'habillage extérieur de la paroi supérieure,
- augmentation de la largeur de l'habitacle, et
- augmentation de la hauteur de l'habitacle.

Bien entendu, l'invention n'est pas limitée aux exemples qui viennent d'être décrits.

## Revendications

1. Profilé (100 ; 200 ; 300) pour la fixation d'une paroi supérieure (402) et d'une paroi latérale longitudinale (406, 408) d'une ossature (400) d'un véhicule terrestre de transport en commun de passagers, en particulier de type bus ou tram-bus, de section fermée, ledit profilé (100 ; 200 ; 300) comprenant :
- une première face (102) pour la fixation de la paroi supérieure (402),
- une deuxième face (104) pour la fixation de la paroi latérale (406, 408),
- une face (106), dite extérieure, se trouvant entre ladite première face (102) et ladite deuxième face (104), et en utilisation, du côté extérieur par rapport à un habitacle (410) dudit véhicule, ladite face extérieure (106) comprenant au moins une surface (110), dite de fixation, pour la fixation d'un élément d'habillage extérieur (116), formant un décroché dans ladite face extérieure (106), vers l'intérieur dudit profilé (100 ; 200 ; 300) ;
**caractérisé en ce qu'**il est creux et réalisé par pliage et soudage d'une unique feuille de tôle, le soudage étant réalisé au niveau d'une face (108), dite intérieure, se trouvant entre la première face (102) et la deuxième face (104), et en utilisation, du côté de l'habitacle (410) du véhicule.

2. Profilé (100 ; 200 ; 300) selon la revendication précédente, **caractérisé en ce que** la première face (102) est décalée par rapport à la deuxième face (104) suivant une direction perpendiculaire à ladite première face (102), de sorte que la deuxième face (104) s'arrête avant ladite première face (102) suivant ladite direction perpendiculaire.

3. Profilé (100 ; 200 ; 300) selon l'une quelconque des revendications précédentes, **caractérisé en ce que** la deuxième face (104) est décalée par rapport à la première face (102) suivant une direction perpendiculaire à ladite deuxième face (104), de sorte que la première face (102) s'arrête avant ladite deuxième face (104) suivant ladite direction perpendiculaire.

4. Profilé (200) selon l'une quelconque des revendications précédentes, **caractérisé en ce que** la première face (102) comprend deux surfaces de fixation (204₁, 204₂), disposées l'une au-dessus de l'autre, et décalées l'une par rapport à l'autre suivant une direction perpendiculaire à ladite face (102), prévue chacune pour y fixer un longeron (112₁, 112₂) faisant partie de la paroi supérieure (402), les longerons étant soudés de bout sur ladite face (102).

5. Profilé (100 ; 200 ; 300) selon l'une quelconque des revendications précédentes, **caractérisé en ce qu'**une surface de fixation (110), dite latérale, est adjacente à la deuxième face (104) et est prévue pour fixer un élément d'habillage (116) de la paroi latérale (406), en particulier une vitre latérale.

6. Profilé (100 ; 200 ; 300) selon la revendication précédente, **caractérisé en ce que** la surface de fixation latérale (110) est perpendiculaire à la deuxième face (104).

7. Profilé selon l'une quelconque des revendications précédentes, **caractérisé en ce qu'**une surface de fixation, dite supérieure, est adjacente à la première face et est prévue pour fixer un élément d'habillage de la paroi supérieure, en particulier un capot supérieur ou une vitre supérieure.

8. Profilé (100 ; 200 ; 300) selon la revendication précédente, **caractérisé en ce que** la première face (102) et la deuxième face (104) forment un angle compris entre 40° et 80°, et en particulier compris entre 55° et 65°.

9. Profilé (100 ; 200 ; 300) selon l'une quelconque des revendications précédentes, **caractérisé en ce qu'**il est réalisé en acier.

10. Profilé (100 ; 200 ; 300) selon l'une quelconque des revendications précédentes, **caractérisé en ce qu'**il est traité contre l'oxydation, en particulier par cataphorèse.

11. Ossature (400) pour véhicule terrestre de transport en commun de passagers, en particulier de type bus ou tram-bus, comprenant une paroi supérieure (402), deux parois latérales longitudinales (406, 408) et une paroi inférieure (404), **caractérisée en ce qu'**elle comprend un profilé (300₁, 300₂), dit supérieur, selon l'une quelconque des revendications précédentes, entre ladite paroi supérieure (402) et au moins une, en particulier chaque, paroi latérale longitudinale (406, 408), de ladite ossature (400).

12. Ossature (400) selon la revendication précédente, **caractérisée en ce qu'**au moins un profilé supérieur (300₁, 300₂) s'étend sur toute la longueur de ladite ossature (400).

13. Ossature (400) selon l'une quelconque des revendications 11 ou 12, **caractérisée en ce que** la première face (102), respectivement la deuxième face (104), dudit profilé (300₁, 300₂) est perpendiculaire à la paroi supérieure (402), respectivement à la paroi latérale (406, 408).

14. Ossature (400) selon l'une quelconque des revendications 11 à 13, **caractérisée en ce que** la paroi latérale (406, 408), respectivement la paroi supérieure (402), est fixée de bout sur le profilé longitudinal supérieur (300₁, 300₂) par soudage.

15. Ossature (400) selon l'une quelconque des revendications 11 à 14, **caractérisée en ce qu'**elle comprend entre la paroi inférieure (404) et au moins une, en particulier chaque, paroi latérale longitudinale (406, 408), un profilé longitudinal (414₁, 414₂, 600), dit inférieur, de section fermée, ledit profilé longitudinal inférieur (414₁, 414₂, 600) comprenant :
- une première face (602) pour la fixation de ladite paroi inférieure (404), et
- une deuxième face (604) pour la fixation de ladite paroi latérale (406, 408) ;
l'une (602, 604) desdites faces étant décalée par rapport à l'autre (604, 602) desdites faces suivant une direction perpendiculaire à ladite une face (602, 604), de sorte que ladite autre face (604, 602) s'arrête avant, et à distance de, ladite une face (602, 604) suivant ladite direction perpendiculaire.

16. Ossature (400) selon la revendication précédente, **caractérisée en ce qu'**au moins un profilé inférieur (414₁, 414₂) comprend une face (608), dite intérieure, se trouvant entre la première face (602) et la deuxième face (604), ladite face intérieure (608) étant recourbée vers l'intérieure dudit profilé (414₁, 414₂).

17. Ossature (400) selon l'une quelconque des revendications 11 à 16 **caractérisé en ce qu'**elle comprend plusieurs anneaux rigides alignés dans le sens longitudinal de ladite ossature (400), chaque anneau rigide faisant le tour de ladite ossature (400) dans le sens de la largeur de ladite ossature (400) et étant formé par :
- un montant (114₁), faisant partie de l'une (406) des parois latérales longitudinales et venant se fixer sur un premier profilé supérieur (300₁) et sur un premier profilé inférieur (414₁) ;
- un montant (114₂), faisant partie de l'autre (408) des parois latérales longitudinales et venant se fixer sur un deuxième profilé supérieur (300₂) et sur un deuxième profilé inférieur (414₂) ;
- au moins un longeron (112₁, 112₂), faisant partie de la paroi supérieure (402) et venant se fixer sur ledit premier profilé supérieur (300₁) et sur ledit deuxième profilé supérieur (300₂) ; et
- un longeron (412), faisant partie de la paroi inférieure (404) de ladite ossature (400) et venant se fixer sur ledit premier profilé inférieur (414₁) et sur ledit deuxième profilé inférieur (414₂).

18. Véhicule terrestre de transport en commun de passagers comprenant une ossature (400) selon l'une quelconque des revendications 11 à 17.

19. Véhicule selon la revendication précédente, **caractérisé en ce qu'**au moins une partie (122) de la face extérieure (106) d'au moins un profilé longitudinal supérieur (100 ; 200 ; 300) forme au moins une partie de la surface extérieure visible dudit véhicule, en particulier au niveau d'un coin supérieur dudit véhicule.

20. Véhicule selon l'une quelconque des revendications 18 ou 19, **caractérisé en ce qu'**il s'agit d'un véhicule électrique, en particulier d'un bus, d'un car, ou d'un tram-bus, électrique.

## Patentansprüche

1. Profil (100; 200; 300) zur Befestigung einer oberen Wand (402) und einer länglichen Seitenwand (406, 408) eines Tragrahmens (400) eines Landfahrzeugs für öffentlichen, insbesondere bus- oder straßenbahn-busartigen Personenverkehr, mit geschlossenem Querschnitt, wobei das Profil (100; 200; 300) umfasst:
- eine erste Fläche (102) zur Befestigung der oberen Wand (402),
- eine zweite Fläche (104) zur Befestigung der Seitenwand (406, 408),
- eine sogenannte Außenfläche (106), die zwischen der ersten Fläche (102) und der zweiten Fläche (104) und bei Gebrauch auf der Außenseite bezüglich einer Kabine (410) des Fahrzeugs verläuft, wobei die Außenfläche (106) mindestens eine sogenannte Befestigungsoberfläche (110) zur Befestigung eines äußeren Verkleidungselements (116) umfasst, welche einen Vorsprung in die Außenfläche (106) hinein zum Inneren des Profils (100; 200; 300) bildet;
**dadurch gekennzeichnet, dass** es hohl und durch Biegen und Schweißen einer einzelnen Blechtafel ausgebildet ist, wobei das Schweißen an einer sogenannten Innenfläche (108) durchgeführt wird, welche zwischen der ersten Fläche (102) und der zweiten Fläche (104) und bei Gebrauch auf der Seite der Kabine (410) des Fahrzeugs verläuft.

2. Profil (100; 200; 300) nach dem vorhergehenden Anspruch, **dadurch gekennzeichnet, dass** die erste Fläche (102) gegenüber der zweiten Fläche (104) in einer Richtung senkrecht zur ersten Fläche (102) derart versetzt angeordnet ist, sodass in der senkrechten Richtung die zweite Fläche (104) vor der ersten Fläche (102) zu Ende ist.

3. Profil (100; 200; 300) nach einem der vorhergehenden Ansprüche, **dadurch gekennzeichnet, dass** in einer Richtung senkrecht zur zweiten Fläche (104) die zweite Fläche (104) gegenüber der ersten Fläche (102) derart versetzt angeordnet ist, sodass in der senkrechten Richtung die erste Fläche (102) vor der zweiten Fläche (104) zu Ende ist.

4. Profil (200) nach einem der vorhergehenden Ansprüche, **dadurch gekennzeichnet, dass** die erste Fläche (102) zwei Befestigungsoberflächen (204₁, 204₂) umfasst, welche übereinander gelagert und in einer Richtung senkrecht zu der Fläche (102) versetzt zu einander sind, wobei sie jeweils dazu vorgesehen sind, dass ein zu der oberen Wand (402) gehörender Längsträger (112₁, 112₂) daran angebracht wird, wobei die Längsträger stoßseitig auf der Fläche (102) geschweißt werden.

5. Profil (100; 200; 300) nach einem der vorhergehenden Ansprüche, **dadurch gekennzeichnet, dass** eine sogenannte seitliche Befestigungsoberfläche (110) mit der zweiten Fläche (104) benachbart und zur Befestigung eines Verkleidungselements (116) der Seitenwand (406), insbesondere einer seitlichen Glasscheibe vorgesehen ist.

6. Profil (100; 200; 300) nach dem vorhergehenden Anspruch, **dadurch gekennzeichnet, dass** die seitliche Befestigungsoberfläche (110) senkrecht zur zweiten Fläche (104) verläuft.

7. Profil nach einem der vorhergehenden Ansprüche, **dadurch gekennzeichnet, dass** eine sogenannte obere Befestigungsoberfläche mit der ersten Fläche benachbart und zur Befestigung eines Verkleidungselements der oberen Wand, insbesondere einer oberen Haube oder einer oberen Glasscheibe vorgesehen ist.

8. Profil (100; 200; 300) nach dem vorhergehenden Anspruch, **dadurch gekennzeichnet, dass** die erste Fläche (102) und die zweite Fläche (104) einen Winkel zwischen 40° und 80° und insbesondere zwischen 55° und 65° bilden.

9. Profil (100; 200; 300) nach einem der vorhergehenden Ansprüche, **dadurch gekennzeichnet, dass** es aus Stahl ausgebildet ist.

10. Profil (100; 200; 300) nach einem der vorhergehenden Ansprüche, **dadurch gekennzeichnet, dass** es insbesondere durch Kataphorese gegen Oxydation behandelt ist.

11. Tragrahmen (400) für Landfahrzeug für öffentlichen, insbesondere bus- oder straßenbahn-busartigen Personenverkehr, umfassend eine obere Wand (402), zwei längliche Seitenwände (406, 408) und eine untere Wand (404), **dadurch gekennzeichnet, dass** es ein sogenanntes oberes Profil (300₁, 300₂) nach einem der vorhergehenden Ansprüche zwischen der oberen Wand (402) und mindestens einer, insbesondere jeder länglichen Seitenwand (406, 408) des Tragrahmens (400) umfasst.

12. Tragrahmen (400) nach dem vorhergehenden Anspruch, **dadurch gekennzeichnet, dass** wenigstens ein oberes Profil (300₁, 300₂) sich über die gesamte Länge des Tragrahmens (400) erstreckt.

13. Tragrahmen (400) nach einem der Ansprüche 11 oder 12, **dadurch gekennzeichnet, dass** die erste Fläche (102) beziehungsweise die zweite Fläche (104) des Profils (300₁, 300₂) senkrecht zur oberen Wand (402) beziehungsweise zur Seitenwand (406, 408) verläuft.

14. Tragrahmen (400) nach einem der Ansprüche 11 bis 13, **dadurch gekennzeichnet, dass** die Seitenwand (406, 408) beziehungsweise die obere Wand (402) stoßseitig an dem oberen Längsprofil (300₁, 300₂) geschweißt ist.

15. Tragrahmen (400) nach einem der Ansprüche 11 bis 14, **dadurch gekennzeichnet, dass** es zwischen der unteren Wand (404) und mindestens einer, insbesondere jeder länglichen Seitenwand (406, 408) ein sogenanntes untere Längsprofil (414₁, 414₂, 600) mit geschlossenem Querschnitt umfasst, wobei das untere Längsprofil (414₁, 414₂, 600) umfasst:
- eine erste Fläche (602) zur Befestigung der unteren Wand (404), und
- eine zweite Fläche (604) zur Befestigung der Seitenwand (406, 408);
wobei die eine (602, 604) der Flächen in einer Richtung senkrecht zu der einen Fläche (602, 604) gegenüber der anderen (604, 602) der Flächen derart versetzt angeordnet ist, sodass die andere Fläche (604, 602) in der senkrechten Richtung vor der und von dieser einen Fläche (602, 604) beabstandet zu Ende ist.

16. Tragrahmen (400) nach dem vorhergehenden Anspruch, **dadurch gekennzeichnet, dass** wenigstens ein unteres Profil (414₁, 414₂) eine sogenannte Innenfläche (608) umfasst, welche zwischen der ersten Fläche (602) und der zweiten Fläche (604) verläuft, wobei die Innenfläche (608) zum Inneren des Profils (414₁, 414₂) gebogen ist.

17. Tragrahmen (400) nach einem der Ansprüche 11 bis 16, **dadurch gekennzeichnet, dass** es mehrere feste, in länglicher Richtung des Tragrahmens (400) angereihte Ringe umfasst, wobei jeder feste Ring den Tragrahmen (400) in der Breite des Tragrahmens (400) umringt und aus folgenden Teilen gebildet ist:
- einem Pfosten (114₁), der zu der einen (406) der länglichen Seitenwände gehört und an einem ersten oberen Profil (300₁) und an einem ersten unteren Profil (414₁) befestigt wird;
- einem Pfosten (114₂), der zu der anderen (408) der länglichen Seitenwände gehört und an einem zweiten oberen Profil (300₂) und an einem zweiten unteren Profil (414₂) befestigt wird;
- mindestens einem Längsträger (112₁, 112₂), der zu der oberen Wand (402) gehört und an dem ersten oberen Profil (300₁) und an dem zweiten oberen Profil (300₂) befestigt wird; und
- einem Längsträger (412), der zu der unteren Wand (404) des Tragrahmens (400) gehört und an dem ersten unteren Profil (414₁) und an dem zweiten unteren Profil (414₂) befestigt wird.

18. Landfahrzeug für öffentlichen Personenverkehr, umfassend einen Tragrahmen (400) nach einem der Ansprüche 11 bis 17.

19. Fahrzeug nach dem vorhergehenden Anspruch, **dadurch gekennzeichnet, dass** wenigstens ein Teil (122) der Außenfläche (106) mindestens eines oberen Längsprofils (100; 200; 300) wenigstens einen Teil der sichtbaren Außenoberfläche des Fahrzeugs, insbesondere an einer oberen Ecke des Fahrzeugs bildet.

20. Fahrzeug nach einem der Ansprüche 18 oder 19, **dadurch gekennzeichnet, dass** es sich um ein Elektrofahrzeug, insbesondere um einen Elektrobus, einen Elektroreisebus oder einen Elektrostraßenbahn-Bus handelt.

## Claims

1. A profile (100;200;300) for fastening an upper panel (402) and a longitudinal side panel (406,408) of a body structure (400) of a public transportation land vehicle, in particular of the bus or tyred tram type, with a closed cross-section, said profile (100;200;300) comprising:
- a first face (102) for fastening the upper panel (402),
- a second face (104) for fastening the side panel (406,408),
- a face (106), called outer face, located between said first face (102) and said second face (104) and, during use, on the outside with respect to a passenger compartment (410) of said vehicle, said outer face (106) comprises at least one surface (110), called fastening surface, for fastening an exterior trim element (116), forming an inset in said outer face (106), towards the inside of said profile (100;200;300);
**characterised in that** it is hollow and produced by folding and welding a single steel sheet, the welding being carried out on a face (108), called inner face, located between the first face (102) and the second face (104), and during use, on the side of the passenger compartment (410) of the vehicle.

2. The profile (100;200;300) according to the preceding claim, **characterised in that** the first face (102) is offset with respect to the second face (104) in a direction perpendicular to said first face (102), so that the second face (104) stops before said first face (102) in said perpendicular direction.

3. The profile (100;200;300) according to any one of the preceding claims, **characterised in that** the second face (104) is offset with respect to the first face (102) in a direction perpendicular to said second face (104), so that the first face (102) stops before said second face (104) in said perpendicular direction.

4. The profile (200) according to any one of the preceding claims, **characterised in that** the first face (102) comprises two fastening surfaces (204₁,204₂), arranged one above the other, and offset with respect to one another in a direction perpendicular to said face (102), each provided for fastening a stringer (112₁,112₂) forming part of the upper panel (402), the stringers being butt-welded to said face (102).

5. The profile (100;200;300) according to any one of the preceding claims, **characterised in that** a fastening surface (110), called lateral fastening surface, is adjacent to the second face (104) and is provided for fastening a trim element (116) of the side panel (406), in particular a side window.

6. The profile (100;200;300) according to the preceding claim, **characterised in that** the lateral fastening surface (110) is perpendicular to the second face (104).

7. The profile according to any one of the preceding claims, **characterised in that** a fastening surface, called upper fastening surface, is adjacent to the first face and is provided for fastening a trim element of the upper panel, in particular an upper cover or an upper window.

8. The profile (100;200;300) according to the preceding claim, **characterised in that** the first face (102) and the second face (104) form an angle of between 40° and 80°, and in particular comprised between 55° and 65°.

9. Profile (100;200;300) according to any one of the preceding claims, **characterised in that** it is made from steel.

10. Profile (100;200;300) according to any one of the preceding claims, **characterised in that** it is treated against oxidation, in particular by cataphoresis.

11. Body structure (400) for a public transportation land vehicle, in particular of the bus or tyred tram type, comprising an upper panel (402), two longitudinal side panels (406,408) and a lower panel (404), **characterised in that** it comprises a profile (300₁,300₂), called upper profile, according to any one of the preceding claims, between said upper panel (402) and at least one, in particular each, longitudinal side panel (406, 408), of said body structure (400).

12. The body structure (400) according to the preceding claim, **characterised in that** at least one upper profile (300₁,300₂) extends over the whole length of said body structure (400).

13. The body structure (400) according to any one of claims 11 or 12, **characterised in that** the first face (102), respectively the second face (104), of said profile (300₁,300₂), is perpendicular to the upper panel (402), respectively the side panel (406,408).

14. Body structure (400) according to any one of claims 11 to 13, **characterised in that** the side panel (406,408), respectively the upper panel (402), is butt-fastened to the upper longitudinal profile (300₁,300₂) by welding.

15. The body structure (400) according to any one of claims 11 to 14, **characterised in that** it comprises, between the lower panel (404) and at least one, in particular each, longitudinal side panel (406,408), a longitudinal profile (414₁,414₂,600), called lower longitudinal profile, with a closed cross-section, said lower longitudinal profile (414₁,414₂,600) comprising:
- a first face (602) for fastening said lower panel (404), and
- a second face (604) for fastening said side panel (406, 408);
one (602,604) of said faces being offset with respect to the other (604,602) of said faces in a direction perpendicular to said one face (602,604), so that said other face (604,602) stops before and at a distance from said one face (602,604) in said perpendicular direction.

16. The body structure (400) according to the preceding claim, **characterised in that** at least one lower profile (414₁,414₂) comprises a face (608), called inner face, located between the first face (602) and the second face (604), said inner face (608) being curved towards the inside of said profile (414₁, 414₂).

17. The body structure (400) according to any one of claims 11 to 16, **characterised in that** it comprises several rigid circular frames aligned in the longitudinal direction of said body structure (400), each rigid circular frame encircling said body structure (400) in the widthwise direction of said body structure (400) and being formed by:
- an upright (114₁), forming part of one (406) of the longitudinal side panels and fastened on a first upper profile (300₁) and a first lower profile (414₁);
- an upright (114₂), forming part of the other (408) of the longitudinal side panels and fastened on a second upper profile (300₂) and a second lower profile (414₂);
- at least one stringer (112₁,112₂), forming part of the upper panel (402) and fastened on said first upper profile (300₁) and said second upper profile (300₂); and
- a stringer (412), forming part of the lower panel (404) of said body structure (400) and fastened on said first lower profile (414₁) and said second lower profile (414₂).

18. A public transportation land vehicle comprising a body structure (400) according to any one of claims 11 to 17.

19. The vehicle according to the preceding claim, **characterised in that** at least a portion (122) of the outer face (106) of at least one upper longitudinal profile (100;200;300) forms at least a portion of the visible outer surface of said vehicle, in particular at an upper corner of said vehicle.

20. The vehicle according to any one of claims 18 or 19, **characterised in that** it is an electric vehicle, in particular an electric bus, coach or tyred tram.
